# EUROPEAN PATENT APPLICATION

(11) **EP 4 570 639 A1**
(43) Date of publication of application: **18.06.2025**
(21) Application number: 23307171.1
(22) Date of filing: 11.12.2023
(51) Int. Cl.: B63B 1/04, B63B 21/50, B63B 35/44

(54) **AN ASSEMBLY FOR PRODUCING OFFSHORE ELECTRICITY COMPRISING A DOUBLE ANCHORED FLOATING SUPPORT**

(71) Applicant: TotalEnergies OneTech, 92400 Courbevoie (FR)
(72) Inventor: RABOIN, Jean-Christophe, 92400 COURBEVOIE (FR); GENTIL, Frédéric, 92400 COURBEVOIE (FR); PUJOL-POCINO, Julie, 92400 COURBEVOIE (FR)
(74) Representative: Lavoix

(57) **Abstract**

An assembly (10) for producing offshore electricity comprising:
- a wind turbine (12),
- an elongated support (14) extending along an axis (Z) intended to be vertical, and adapted for floating on a body of water (16),
- a buoyant system (18) surrounding a tubular casing (20) of the support around the axis, intended for floating in the body of water, and vertically free with respect to the support,
- a plurality of anchoring members (24),
- a first plurality of connecting members (26) connected to an anchoring portion (28) of the support and to at least some of the anchoring members, the first plurality of connecting members (26) being intended to be tensioned by the support,
- a second plurality of connecting members (30) connected to the buoyant system and to at least some of the anchoring members, the second plurality of connecting members being intended to be tensioned by the buoyant system.

## Description

The present invention deals with an assembly for producing offshore electricity comprising a wind turbine.

As of today, most of these assemblies comprise either a monopile or a jacket on which the tower of the wind turbine is fixed. To a lesser extent, there are also some examples of gravity based structures (GBS).

Jackets are made of steel tubes welded together and having a typical diameter between 0.5 and 1.5m. They are able to withstand large efforts both horizontally and vertically, and allow accessing large water depths. However, jackets have to be tailor made and are rather expensive, especially for serial fabrication and installation. Their weight is proportional to the cube of the water depth.

Monopiles are recognized by the offshore wind industry as an economical bottom-fixed concept for serial installation of wind turbines, and are therefore preferred whenever possible. Their cost per installed MW can be significantly less than that of a jacket, for which supply chain and manufacturing process are completely different.

Monopiles have however their own limitations. First, the maximum diameter that can be efficiently obtained is around 10 to 11m. As a result, due to their relative slenderness, monopiles are limited to shallow areas, and are generally not competitive with jackets above 30-40m water depths, depending on soil and local weather conditions. The largest/longest monopiles are also heavy and difficult to handle onshore and to transport to the offshore site, and finally challenging to install by either driving or drilling/grouting.

An aim of the invention is to reduce the cost of offshore electricity in some situations where jackets are generally used, because monopiles would be too large to be produced and/or too expensive, or to further reduce the electricity cost in some situation where monopiles can already be used.

To this end, the invention proposes an assembly for producing offshore electricity comprising:
- a wind turbine,
- an elongated support extending along an axis intended to be vertical, and adapted for floating on a body of water and for fully supporting the wind turbine,
- a buoyant system surrounding a tubular casing of the support around the axis, the buoyant system being intended for floating under a surface of the body of water, the buoyant system being vertically free with respect to the support, the body of water being intended to apply a first upward force on the support, and a second upward force on the buoyant system,

- a plurality of anchoring members,
- a first plurality of connecting members connected to an anchoring portion of the support on the one hand, and respectively to at least some of the anchoring members on the other hand, the first plurality of connecting members being intended to be tensioned by the support, and
- a second plurality of connecting members connected to the buoyant system on the one hand, and respectively to at least some of the anchoring members on the other hand, the second plurality of connecting members being intended to be tensioned by the buoyant system.

In other embodiments, the assembly comprises one or several of the following features, taken in isolation or any technically feasible combination:
- the tubular casing is included in an upper part of the support, and the anchoring portion is included in a lower part of the support;
- the anchoring portion has a jacket structure extending from the tubular casing downwards along the axis;
- the anchoring portion has a shape flaring upwards;
- the anchoring portion is tubular;
- the tubular casing is cylindrical;
- the buoyant system comprises rolls adapted for rolling on the tubular casing, and/or pads adapted for sliding on the tubular casing;
- the first plurality of connecting members and the second plurality of connecting members respectively consist of three connecting members, and the plurality of anchoring members consists of three anchoring members;
- each of the anchoring members is connected to one of the connecting members of the first plurality and to one of the connecting members of the second plurality;
- the connecting members of the first plurality define first angles with a horizontal plane, each of the first angles being comprised between 30° and 45°; and the connecting members of the second plurality define second angles with the horizontal plane, each of the second angles being larger than any one of the first angles and being comprised between 45° and 75°;
- the connecting members of the first plurality are connected to a lower end of the support;
- the connecting members of the second plurality are fixed to a lower part of the buoyant system;
- each of the connecting members of the first plurality and the connecting members of the second plurality comprises a synthetic rope, a steel cable or a steel chain;
- the assembly comprises a stopper fixed to the support above the buoyant system, the stopper being adapted for blocking the buoyant system along the axis upwards in case at least one of the connecting members of the second plurality breaks; and
- the tubular casing has a maximum external diameter ranging from 8.0 to 12.0 meters.

The invention and its advantages will be better understood upon reading the following description, given solely by way of example and with reference to the appended drawings, in which:
- Figure 1 is a schematic perspective view of an assembly according to an embodiment of the invention,
- Figure 2 is a schematic perspective view of an assembly according to another embodiment of the invention, and
- Figure 3 is a schematic perspective view of a buoyant system according to a variant of the buoyant system shown in Figures 1 and 2.

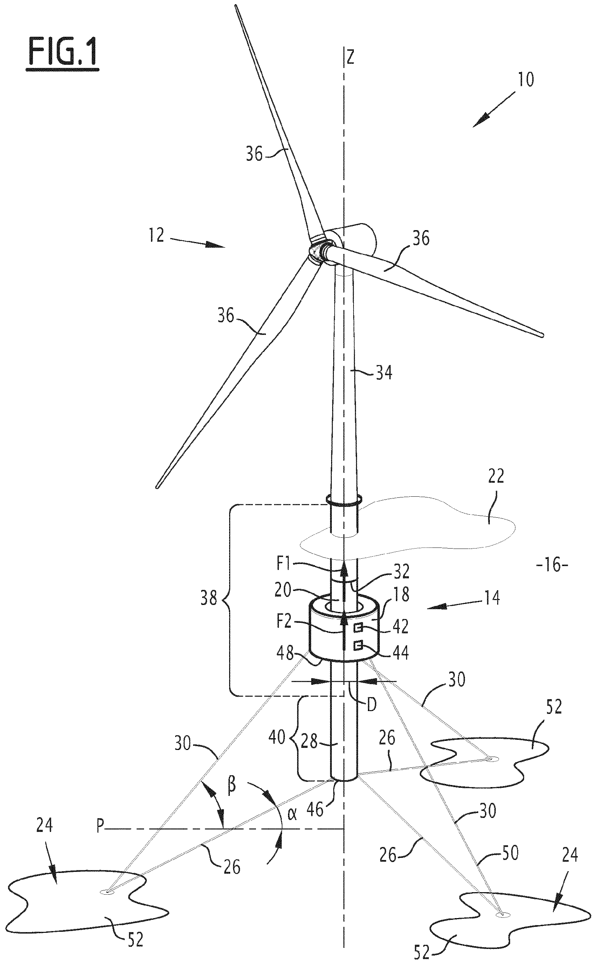

An assembly 10 according to an embodiment of the invention will now be described with reference to Figure 1.

The assembly 10 is adapted for producing offshore electricity.

The assembly 10 comprises a wind turbine 12, and an elongated support 14 extending along an axis Z intended to be vertical when the assembly is balanced, the support being adapted for floating on a body of water 16 and for fully supporting the wind turbine.

The assembly 10 comprises a buoyant system 18 surrounding a tubular casing 20 of the support 14 around the axis Z, the buoyant system being intended for floating under a surface 22 of the body of water 16, the buoyant system being vertically free with respect to the support.

By "tubular", it is meant that the casing comprises one large tube, not a plurality of smaller tubes like in a jacket structure.

The assembly 10 comprises a plurality of anchoring members 24 and a first plurality of connecting members 26 connected to an anchoring portion 28 of the support 14 on the one hand, and respectively to the anchoring members 24 on the other hand, the first plurality of connecting members 26 being tensioned by the support.

The assembly 10 comprises a second plurality of connecting members 30 connected to the buoyant system 18 on the one hand, and respectively to the anchoring members 24 on the other hand, the second plurality of connecting members 30 being tensioned by the buoyant system.

The assembly 10 for example comprises a stopper 32 fixed to the support 14 above the buoyant system 18, the stopper being adapted for blocking the buoyant system along the axis Z upwards in case at least one of the connecting members 30 of the second plurality breaks.

The body of water 16 is for example a sea or a lake. The body of water 16 is intended to apply a first upward force F1 on the support 14, and a second upward force F2 on the buoyant system 18.

The wind turbine 12 comprises a tower 34 for example fixed to the top of the support 14, and blades 36 rotatably mounted on the tower.

By "elongated", it is meant that the support 14 is at least ten times longer along the axis Z than along any axis (not shown) perpendicular to the axis Z.

For example, the support 14 comprises at least 90wt.% of steel or concrete.

The support 14 may comprise a system (not shown) adapted for adjusting the buoyancy of the support.

In the example, the tubular casing 20 forms an upper part 38 of the support 14, and the anchoring portion 28 forms a lower part 40 of the support.

The tubular casing 20 is advantageously cylindrical. For example, the tubular casing 20 has a maximum external diameter D ranging from 8.0 to 12.0 meters

The anchoring portion 28 is for example tubular. The anchoring portion 28 is advantageously an extension of the tubular casing 20.

As a variant (not shown), the anchoring portion 28 has a shape flaring upwards, for example frustoconical.

The buoyant system 18 advantageously comprises rolls 42 adapted for rolling on the tubular casing 20, and/or pads 44 adapted for sliding on the tubular casing. Only one roll 42 and one pad 44 are shown in Figure 1.

The buoyant system 18 may comprise a single ring-shaped float, or as a variant (not shown) several floats connected one to another.

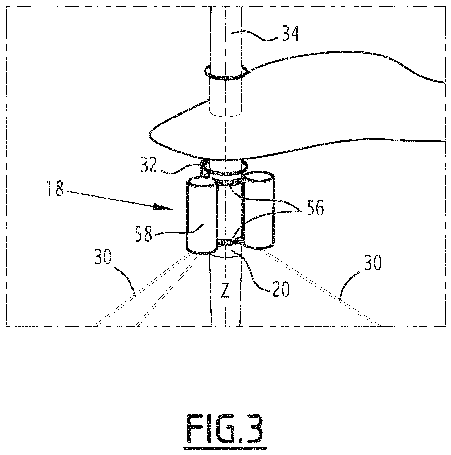

As a variant shown in Figure 3, the buoyant system 18 comprises a structure 56 surrounding the tubular casing 20 around the axis Z, and three reservoirs 58 fixed to the structure 56, the second plurality of connecting members 30 being respectively connected to the three reservoirs 58.

As other variants (not shown), there are more than three reservoirs 58, and advantageously an equal number of connecting members 30.

The connecting members 26, 30 form a double anchoring system.

Advantageously, the first plurality of connecting members 26 and the second plurality of connecting members 30 respectively consist of three connecting members, and the plurality of anchoring members 24 consists of three anchoring members.

As variants (not shown), there may be four or more of the elements 24, 26, 30.

Advantageously, each of the anchoring members 24 is connected to one of the connecting members 26 and to one of the connecting members 30. This allows dividing the number of anchoring members 24 by two, compared to a situation where each of the connecting members 26, 30 would have a dedicated anchoring member 24.

The connecting members 26 of the first plurality for example define first angles α with a horizontal plane P, each of the first angles being comprised between 30° and 45°. The connecting members 26 of the first plurality are advantageously connected to a lower end 46 of the support 14.

The connecting members 30 of the second plurality define second angles β with the horizontal plane P, each of the second angles being in the example larger than any one of the first angles α and being for example comprised between 45° and 75°.

The connecting members 30 of the second plurality are advantageously fixed to a lower part 48 of the buoyant system 18.

Each of the connecting members 26, 30 for example comprises a synthetic rope 50, or as a variant a steel cable or a steel chain.

Thanks to the above described features, the support 14 is very stable. The support 14 is maintained close to vertical by the connecting members 26 of the first plurality and by the buoyant system 18, the latter being maintained by the connecting members 30 of the second plurality. This allows avoiding a complex anchoring structure and limits the required diameter D of the tubular casing 20.

As a result, the cost of producing and installing the assembly 10 is reduced, which reduces the offshore electricity cost in some situations where jackets are generally used.

The invention also reduces the costs compared to a solution where the support 14 would penetrate in a seabed 52 (forming a usual monopile), or would form an articulation by resting on a base lying on the seabed.

Compared to a SPAR platform, the support 14 is shorter, hence lighter and less expensive.

Besides, when the number of the connecting member 26 and 30 is three, the assembly 10 is advantageously isostatic.

When the connecting members 26 and 30 share the same anchoring members 24, the number of anchoring members is reduced, which limits the preparation work on the seabed 52, and facilitates dismantling the assembly 10.

The invention also provides design and installation flexibility against water depth and soil conditions variations over large windfarms sites, thus improving serial fabrication and reducing installation costs.

In general, the invention is adapted to the serial fabrication and installation in windfarm development projects. The invention is also compatible with modern installation vessels, such as Huisman's Windfarms Installation Vessel designed for serial installation of monopiles and wind turbines, reducing logistics and marshalling costs.

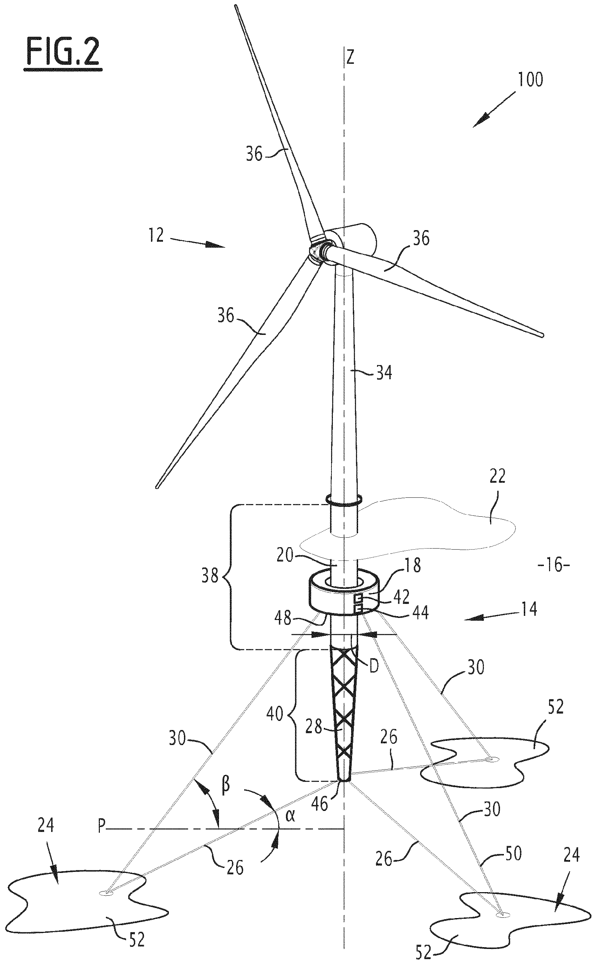

An assembly 100 according to another embodiment of the invention will now be described with reference to Figure 2.

The assembly 100 is analogous to the assembly 10 shown in Figure 1. Similar elements bear the same numeral references and will not be described again. Only the differences will be described hereafter in detail.

The anchoring portion 28 is not tubular. The anchoring portion 28 has a jacket structure extending from the tubular casing 20 downwards along the axis Z.

The anchoring portion 28 for example has a shape flaring upwards.

Thanks to the above particular features, the assembly 100 has a more rigid lower part 40 than the assembly 10, but may be more expensive.

The assembly 100 may also be more stable than the assembly 10, as buoyancy is reduced in the lower part 40.

## Claims

1. An assembly (10; 100) for producing offshore electricity comprising:
- a wind turbine (12),
- an elongated support (14) extending along an axis (Z) intended to be vertical, and adapted for floating on a body of water (16) and for fully supporting the wind turbine (12),
- a buoyant system (18) surrounding a tubular casing (20) of the support (14) around the axis (Z), the buoyant system (18) being intended for floating under a surface (22) of the body of water (16), the buoyant system (18) being vertically free with respect to the support (14), the body of water (16) being intended to apply a first upward force (F1) on the support (14), and a second upward force (F2) on the buoyant system (18),
- a plurality of anchoring members (24),
- a first plurality of connecting members (26) connected to an anchoring portion (28) of the support (14) on the one hand, and respectively to at least some of the anchoring members (24) on the other hand, the first plurality of connecting members (26) being intended to be tensioned by the support (14), and
- a second plurality of connecting members (30) connected to the buoyant system (18) on the one hand, and respectively to at least some of the anchoring members (24) on the other hand, the second plurality of connecting members (30) being intended to be tensioned by the buoyant system (18).

2. The assembly (10; 100) according to claim 1, wherein the tubular casing (20) is included in an upper part (38) of the support (14), and the anchoring portion (28) is included in a lower part (40) of the support (14).

3. The assembly (100) according to claim 2, wherein the anchoring portion (28) has a jacket structure extending from the tubular casing (20) downwards along the axis (Z).

4. The assembly (10; 100) according to any one of claims 1 to 3, wherein the anchoring portion (28) has a shape flaring upwards.

5. The assembly (10) according to claim 1 or 2, wherein the anchoring portion (28) is tubular.

6. The assembly (10; 100) according to any one of claims 1 to 5, wherein the tubular casing (20) is cylindrical.

7. The assembly (10; 100) according to any one of claims 1 to 6, wherein the buoyant system (18) comprises rolls (42) adapted for rolling on the tubular casing (20), and/or pads (44) adapted for sliding on the tubular casing (20).

8. The assembly (10; 100) according to any one of claims 1 to 7, wherein the first plurality of connecting members (26) and the second plurality of connecting members (30) respectively consist of three connecting members, and the plurality of anchoring members (24) consists of three anchoring members.

9. The assembly (10; 100) according to any one of claims 1 to 8, wherein each of the anchoring members (24) is connected to one of the connecting members (26) of the first plurality and to one of the connecting members (30) of the second plurality.

10. The assembly (10; 100) according to any one of claims 1 to 9, wherein:
- the connecting members (26) of the first plurality define first angles (α) with a horizontal plane (P), each of the first angles (α) being comprised between 30° and 45°, and
- the connecting members (30) of the second plurality define second angles (β) with the horizontal plane (P), each of the second angles (β) being larger than any one of the first angles (α) and being comprised between 45° and 75°.

11. The assembly (10; 100) according to any one of claims 1 to 10, wherein the connecting members (26) of the first plurality are connected to a lower end (46) of the support (14).

12. The assembly (10; 100) according to any one of claims 1 to 11, wherein the connecting members (30) of the second plurality are fixed to a lower part (48) of the buoyant system (18).

13. The assembly (10; 100) according to any one of claims 1 to 12, wherein each of the connecting members (26) of the first plurality and the connecting members (30) of the second plurality comprises a synthetic rope (50), a steel cable or a steel chain.

14. The assembly (10; 100) according to any one of claims 1 to 13, comprising a stopper (32) fixed to the support (14) above the buoyant system (18), the stopper (32) being adapted for blocking the buoyant system (18) along the axis (Z) upwards in case at least one of the connecting members (30) of the second plurality breaks.

15. The assembly (10; 100) according to any one of claims 1 to 14, wherein the tubular casing (20) has a maximum external diameter (D) ranging from 8.0 to 12.0 meters.

16. The assembly (10; 100) according to any one of claims 1 to 15, wherein the buoyant system (18) comprises a structure (56) surrounding the tubular casing (20) around the axis (Z), and at least three reservoirs (58) fixed to the structure (56), the second plurality of connecting members (30) being respectively connected to the at least three reservoirs (58).
